**Europäisches Patentamt**

**European Patent Office**

**Office européen des brevets**

(19)

(11) **EP 0 662 012 B1**

(12) **EUROPÄISCHE PATENTSCHRIFT**

(45) Veröffentlichungstag und Bekanntmachung des Hinweises auf die Patenterteilung:
**22.04.1998 Patentblatt 1998/17**

(21) Anmeldenummer: **94924791.0**

(22) Anmeldetag: **21.07.1994**

(51) Int. Cl.$^6$: **A63B 55/08**, B62D 51/04

(86) Internationale Anmeldenummer:
**PCT/EP94/02399**

(87) Internationale Veröffentlichungsnummer:
**WO 95/03096 (02.02.1995 Gazette 1995/06)**

(54) **PRIMÄR DURCH MENSCHEN- ODER TIERKRAFT ANGETRIEBENE, INSBESONDERE GEZOGENE ODER GESCHOBENE, FAHRBARE VORRICHTUNG MIT ELEKTRISCHEM HILFSANTRIEB**

A TRAVELLING DEVICE PRIMARILY DRIVEN, IN PARTICULAR DRAWN OR PUSHED, BY HUMAN OR ANIMAL POWER COMPRISING ELECTRIC AUXILIARY DRIVE

DISPOSITIF MOBILE, MU PRINCIPALEMENT PAR FORCE HUMAINE OU ANIMALE, NOTAMMENT TRACTE OU POUSSE COMPRENANT UNE COMMANDE AUXILIERE ELECTRIQUE

(84) Benannte Vertragsstaaten:
**AT BE CH DE DK ES FR GB GR IE IT LI LU NL PT SE**
Benannte Erstreckungsstaaten:
**SI**

(30) Priorität: **24.07.1993 DE 9311075 U**

(43) Veröffentlichungstag der Anmeldung:
**12.07.1995 Patentblatt 1995/28**

(73) Patentinhaber: **Strothmann, Rolf**
**D-66121 Saarbrücken (DE)**

(72) Erfinder: **Strothmann, Rolf**
**D-66121 Saarbrücken (DE)**

(74) Vertreter:
**Bernhardt, Winfrid, Dr.-Ing.**
**Kobenhüttenweg 43**
**66123 Saarbrücken (DE)**

(56) Entgegenhaltungen:
**DE-A- 2 027 409          GB-A- 2 206 753**
**US-A- 3 976 151          US-A- 4 541 051**

**Beschreibung**

Die Erfindung betrifft eine Vorrichtung, welche zum Fahrantrieb primär durch Muskelkraft, insbesondere Zug- oder Schubkraft, vorgesehen ist.

Anwendungsgebiet der Erfindung sind beispielsweise Golfkarren und Flurfördergeräte, aber auch vieles andere mehr.

Für die normalerweise vom Benutzer gezogenen oder geschobenen, zweirädrigen oder dreirädrigen Golfkarren mit aufgeschnalltem Golfsack o.ä. kennt man auch elektrische Antriebe der Räder. Sie werden in der Regel mittels eines nahe dem Griff des Golfkarrens angeordneten Stellhebels nach Bedarf gesteuert. Die erforderliche Batterie ist so ausgelegt, daß sie jedenfalls für eine durchschnittliche 18-Loch-Runde ausreicht. Damit hat sie allerdings ein nicht unerhebliches Gewicht, das das Hantieren mit ihr bzw. mit dem Golfkarren, insbesondere im unebenen Gelände, erschwert und teilweise unmöglich macht.

Aus der US-PS 3,976,151 ist ein Golfkarren bekannt, welcher über einen Motorantrieb verfügt und welcher über einen vom Benutzer getragenen Sender ferngesteuert wird, so daß er dem Benutzer folgt und in einem vorgegebenen Abstand vom Benutzer anhält, wenn dieser stehen bleibt. Neben einer Fernsteuerung ist er mit einer einen vorstehenden Steuerhebel umfassenden Handsteuerung versehen, über die der Benutzer den Golfkarren in besonderen Fällen, in denen ein bestimmter Fahrweg genau einzuhalten ist, lenken kann. Der Antriebsmotor wird, z.B. bei abschüssiger Fahrbahn, zum Bremsen des Golfkarrens vollendet.

Der Erfindung liegt die Aufgabe zugrunde, eine fahrbare Vorrichtung der eingangs erwähnten Art zu schaffen, die insgesamt leicht zu handhaben ist und auch einen im Gebrauch bequemen, energiesparenden Antrieb aufweist.

Die diese Aufgabe lösende fahrbare Vorrichtung nach der Erfindung weist einen elektrischen Hilfsantrieb auf, der unter Erzeugung eines Antriebsmoments unterstützend wirksam ist, wenn eine erforderliche Antriebskraft einen vorgegebenen Wert einer auszuübenden primären Muskelantriebskraft überschreitet, und unter Erzeugung eines Bremsmoments generatorisch wirksam ist, wenn die erforderliche Antriebskraft den Wert unterschreitet, und der eine Einrichtung zum Messen der ausgeübten primären Muskelantriebskraft und eine Steuerung zum Einregeln des Meßwertes auf den vorgegebenen Wert durch Änderung des Antriebs- oder Bremsmoments umfaßt.

Die Erfindung geht also von einer vom Benutzer selbst aufgebrachten Grundlast aus, die bequem bemessen sein kann, und erspart dem Benutzer die größeren Anstrengungen. Da auf der anderen Seite im Vergleich mit dem vollen motorischen Antrieb Energie gespart wird, reicht eine leichtere Batterie aus. Die Batterie kann umso leichter sein, als, abgesehen vom durch die Wirkungsgrade bestimmten Verlust, bergab wiedergewonnen wird, was bergauf zugesetzt wird, und sie überdies auch auf ebener Bahn immer etwas geladen wird, soweit nicht die inneren Verluste oder Unebenheiten des Bodens die vorgegebene primäre Antriebskraft aufzehren. Im übrigen ist die Steuerung automatisiert und verlangt keine Betätigung.

Bei günstigen Betriebsbedingungen können die entstehenden Verluste vollständig ausgeglichen werden und die Notwendigkeit externer Ladung der Batterie entfällt. Damit entfällt auch die sonst für batteriebetriebene Fahrzeuge immer erforderliche Infrastruktur.

Vorzugsweise ist die vorgegebene primäre Muskelantriebskraft, die ein Mensch oder Tier aufzubringen hat, willkürlich und/oder durch ein Steuerprogramm veränderbar.

Sie läßt sich so beispielsweise beim Golfwagen je nach Wunsch auf 10 bis 15 N einstellen und kann durch Steuerprogramm nach einiger Zeit verringert werden, um die zunehmende Ermüdung auszugleichen. Sie kann bergauf verringert werden, wo dem Benutzer schon sein eigenes Körpergewicht mehr Leistung abverlangt, oder auch vergrößert werden, um näher an den natürlichen Verhältnissen zu bleiben. Sie kann auch erhöht werden, wenn es steiler bergab geht; der Zug an dem Golfkarren vermindert dann das Abstoppen der Körperbewegung bei jedem Schritt. Wegen der Grenze der generatorischen Bremswirkung kann es allerdings notwendig werden, daß der Benutzer selbst auch bremst. In diesem Falle kann sogar ein Umschalten auf motorische Bremsung vorgesehen werden.

Ggf. stark erhöht werden kann die vorgegebene primäre Muskelantriebskraft auch mit Rücksicht auf den Ladezustand der Batterie.

Für den erfindungsgemäßen Hilfsantrieb besonders geeignet sind Drehstromsynchronmotore. Sie lassen sich gut steuern und können umgekehrt als Dynamo arbeiten.

Nach einer weiteren vorteilhaften Ausgestaltung der Erfindung sind zwei gleichachsige Räder jeweils mit einem Motor versehen und gesondert gesteuert, wobei die auf die verschiedenen Räder entfallenden Anteile der ausgeübten primären Muskelantriebskraft aus einer Messung eines in einem Vorrichtungsgestell auftretenden Biegemomentes oder einer Querkraft ermittelt werden. Ein von den Rädern auf das Vorrichtungsgestell bzw. über das Vorrichtungsgestell auf die Räder ausgeübtes Drehmoment erzeugt entsprechende Biegemomente und Querkräfte in dem Vorrichtungsgestell.

Mit der gesonderten Steuerung der Räder wird auch die Kurvenbewegung erleichtert, besonders das Drehen auf der Stelle.

Dieser Vorteil wirkt sich beispielsweise bei Flurfördergeräten voll aus, die, etwa in Lagerhallen, nur auf ebenem Boden eingesetzt sind. Im übrigen ist bei dieser Art des Einsatzes aber auch die mit dem erfindungsgemäßen Hilfsantrieb immer verbundene Unterstützung und generatorische Bremsung beim Anfahren und Halten wirksam.

Die Messung eines in dem Gestell auftretenden Biegemomentes ist z.B. sehr einfach mit einer Mehrzahl von Dehnmeßstreifen möglich, die an geeigneten, verschiedenen Stellen einer Zugstange angebracht sind, die das Gestell in der Regel in irgendeiner Form aufweist.

Auch die bloße Zug- oder Schubkraft kann sehr einfach mittels mindestens eines Dehnmeßstreifens gemessen werden, der an einer Biegung der Zugstange, vorzugsweise an der den Griff bildenden Biegung der Zugstange, angebracht ist. Stärkere Zugkraft weitet die Biegung stärker auf, zwar nur äußerst geringfügig, aber von Dehnmeßstreifen wahrnehmbar.

Eine konstruktiv besonders günstige Verwirklichung, die die Erfindung dank der verringerten Batteriegröße erlaubt, besteht darin, daß zwei Räder mit getriebelos integrierten Motoren an einer Achse von der Form eines langgestreckten Kastens angeordnet sind, in dem die Batterien untergebracht sind, ggf. ferner die Steuerung untergebracht ist. Die Batterien treten hier kaum noch in Erscheinung.

Ein noch weiterer Schritt in dieser Richtung besteht darin, daß die Räder, vorzugsweise getriebelos, mit integrierten Motoren ausgerüstet sind und mit jeweils eigenen, integrierten Batterien, vorzugsweise ferner mit der zugehörigen Steuerung.

Die Integrierung der Batterien in die Räder zusammen mit den Motoren läßt gegenüber der bloßen Integrierung der Motoren Anschlüsse der Räder für Energieübertragung entfallen. Die Räder sind mit Ausnahme der Steueranschlüsse bzw. der Verbindung mit der Meßvorrichtung absolut selbständige Einheiten. Ermöglicht wird dies durch die mit der Erfindung verbundene Verringerung der benötigten Batteriekapazität und grundsätzlichen Erhaltung eines ausreichenden Ladezustands.

Die Räder mit integriertem Motor brauchen nur noch auf Achsstummeln angeordnet zu sein, die mittels drehsicherer Steckverbindungen zu befestigen sind. Nach einer vorteilhaften Ausgestaltung der Erfindung sind mit den mechanischen Steckverbindungen elektrische Steckverbindungen für die in das Rad führenden Leitungen kombiniert, d.h. Steuerleitungen und Energieversorgungsleitungen im Falle der Räder mit nur integriertem Motor und Steuerleitungen allein im Falle der Räder mit integriertem Motor und integrierten Batterien.

Grundsätzlich mögliche Meßvorrichtungen für die primäre Antriebskraft sind oben schon erwähnt worden. Vorzugsweise ist jedoch zur Messung der primären Antriebskraft, ggf. ferner des Drehmomentes, eine Meßeinheit in einem Vorrichtungsgestell angeordnet an einem Punkt, bevorzugt einem Knotenpunkt der Gestellkonstruktion, durch den der gesamte Kraftfluß der primären Antriebskraft geht, vorzugsweise zwischen einem Handgriff und einer Zugstange oder am anderen Ende der Zugstange. Diese Konzentrierung der Messung in einer gesonderten, in die Gestellkonstruktion eingebauten Einheit ist fertigungstechnisch zweckmäßig und ermöglicht es darüber hinaus, besondere für die Messung günstige Umstände zu schaffen. In dieser Hinsicht wird als weitere vorteilhafte Ausgestaltung der Erfindung vorgeschlagen, daß die Meßeinheit aus einem, vorzugsweise in eine Kunststoffmasse eingebetteten, Formkörper besteht, an dem durch Ausnehmungen verstärkt biegebeanspruchte Stege geschaffen sind, an denen Dehnmeßstreifen angebracht sind.

Es werden Paare von Dehnmeßstreifen vorgeschlagen, die nebeneinander derart angeordnet sind, daß der eine Dehnmeßstreifen gedehnt wird, wenn der andere gestaucht wird, und in Brückenschaltung verbunden sind. Damit werden Unsymmetrieen weitgehend ausgeglichen.

Die Einbettung der Meßeinheit kann gleichfalls kraftübertragend in die Gestellkonstruktion eingebunden sein. Damit läßt sich der genannte Formkörper vor Überbelastungen schützen, insbesondere hinsichtlich Kraftübertragungen in anderer Richtung als den beabsichtigten Biegebeanspruchungen, vor allem quer dazu.

Für die konstruktive Verwirklichung der Erfindung an einem Golfwagen wird vorgeschlagen, daß der genannte Kasten als Zentralkörper einer Halterung für den Golfsack angeordnet ist mit zwei starr von ihm ausgehenden, konvergierenden, am Ende nach oben und auseinander gewinkelten Stangen, die durch eine an ihrem Ende mit einem Griff versehene Zugstange fortgesetzt sind, und einem in zwei Gelenken an ihm befestigten, aus einer Stützstellung an die beiden Stangen heranklappbaren Tragbügel, und daß die Meßeinheit am Übergang zwischen den genannten Stangen und der Zugstange oder zwischen dieser und dem Handgriff angeordnet ist.

Dies ist eine dem erfindungsgemäßen Antrieb gemäße und durch die Erfindung bei einem immerhin teilweise angetriebenen Golfkarren ermöglichte, besonders leichte Ausführung.

Als Anwendungsgebiet der Erfindung sind bereits Golfkarren und Flurfördergeräte genannt worden. Als in Betracht stehende Flurfördergeräte seien hier ausdrücklich noch solche für die Postzustellung sowie Einkaufswagen erwähnt, ferner Rollstühle, Fahrräder, Rikschas, auch Fahrradrikschas.

Die Zeichnungen geben ein Ausführungsbeispiel der Erfindung wieder.

Fig. 1 zeigt schematisch einen Golfkarren in Draufsicht,
Fig. 2 zeigt in größerem Maßstabe eine Zugstange des Golfkarrens in Draufsicht,
Fig. 3 zeigt einen weiteren Golfkarren in isometrischer Darstellung,
Fig. 4 zeigt, leicht abgewandelt, eine Einzelheit aus Fig. 3,
Fig. 5 und 6 zeigen zusammen ein Rad des Golfkarrens nach Fig. 3,

Fig. 7 zeigt einen Griff eines anderen Golfkarrens in Ansicht,

Fig. 8 zeigt einen inneren Bestandteil des Griffes nach Fig. 7 in größerem Maßstab,

Fig. 9 zeigt aus Dehnmeßstreifen gebildete Brükkenschaltungen,

Fig. 10 zeigt ein Funktionsschema eines Hilfsantriebs

Fig. 11 zeigt ein Rad in einem axialen Schnitt und

Fig. 12 zeigt einen Schnitt Linie X-X in Fig. 9.

Ein im wesentlichen aus einer Zugstange 1 und einem Querbalken 2 bestehendes Vorrichtungsgestell 3 weist an den Enden des Querbalkens 2 zwei jeweils mit einem Drehstromsynchronmotor 4 versehene Räder 5 auf. Auf der Mitte des Querbalkens 2 sind eine Batterie 6 und ein Steuergerät 7 angeordnet. Am Griff 8 der Zugstange 1 befindet sich eine Meßvorrichtung 9.
Ein Golfsack 10 ist strichpunktiert umrissen angedeutet.

Die Meßvorrichtung 9 umfaßt zwei in der Biegung des Griffes 8 rechts und links angebrachte Dehnmeßstreifen 11 und 12.
Zwei weitere Dehnmeßstreifen 13 und 14 sind rechts und links am hinteren Ende der Zugstange 1 angebracht.

Die Dehnmeßstreifen 11 und 12 sind jeweils in einer Brückenschaltung angeordnet. Die Spannungen der beiden Brücken werden in dem Steuergerät gegeneinander verrechnet. Daraus ergibt sich die Grundbeaufschlagung der beiden Drehstromsynchronmotoren 4.

Die Dehnmeßstreifen 13 und 14 sind gleichfalls jeweils in einer Brückenschaltung angeordnet, und die Spannungen werden in dem Steuergerät gegeneinander verrechnet. Mit dem daraus sich ergebenden Wert wird die Grundbeaufschlagung auf die beiden Drehstromsynchronmotoren je nach den Verhältnissen verteilt.

Im einzelnen:

Bei Zug geradeaus wird infolge der Hebelwirkung des Griffes 8 und der damit im Bereich der Meßeinrichtung 9 entstehenden Biegebeanspruchung der Dehnmeßstreifen 12 gedehnt und der Dehnmeßstreifen 11 gestaucht. Bei Überschreiten einer Grenze werden die von der Batterie 6 gespeisten Drehstromsynchronmotoren 4 eingeschaltet. Dies kann eine Ein-Aus-Schaltung sein. Vorzugsweise wird jedoch ein von der Zugkraft abhängiges Drehmoment erzeugt.
Gleiches gilt für Schub mit der Umkehrung, daß der Dehnmeßstreifen 11 gedehnt und der Dehnmeßstreifen 12 gestaucht wird.

Kommt zu dem Zug eine Drehung, entsteht in dem Gestell 3 ein Drehmoment. Die Zugstange 1 wird gegenüber dem Querbalken 3 in eine Biegespannung versetzt. Je nach der Drehrichtung wird der Dehnmeßstreifen 13 gedehnt und der Dehnmeßstreifen 14 gestaucht oder umgekehrt. Der daraus gewonnene Spannungswert verteilt die aus der Meßvorrichtung 9 vorgegebene Grundbeaufschlagung unterschiedlich auf die beiden Drehstromsynchronmotoren 4 im Sinne des Ausgleichs. Auch diese Verteilung ist vorzugsweise quantitativ in Abhängigkeit von dem ermittelten Drehmoment bemessen.

Unterhalb des Grenzwertes, bei dem der Hilfsantrieb zugeschaltet wird, sind die Drehstromsynchronmotoren als Generatoren auf Batterieladung geschaltet. Dabei wird vorzugsweise unabhängig vom Gefälle der Wegstrecke immer gleiche Zugkraft eingestellt durch entsprechende Ladearbeit und damit Bremsung der Räder.

Die paarweise Anordnung der Dehnmeßstreifen 11 und 12 bzw. 13 und 14, deren Spannungen gegeneinander verrechnet werden, schaltet Unsymmetrieen weitgehend aus. Das Ausgangssignal ist erhöht.

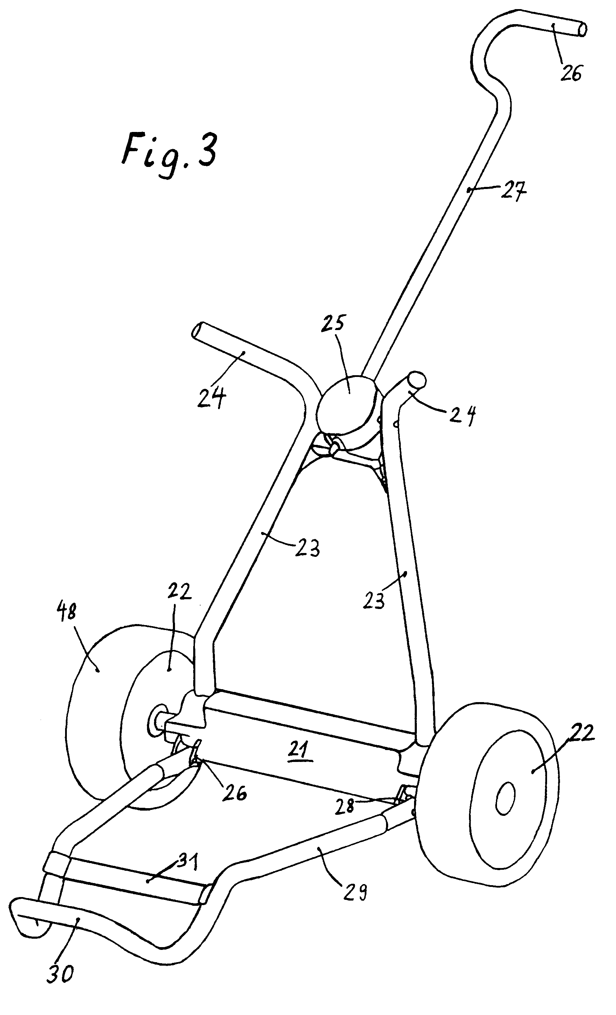

Der Golfkarren nach Fig. 3 weist an einer kastenförmigen Achse 21 zwei Räder 22 auf. In die Räder 22 sind Motoren integriert, die von in der kastenförmigen Achse 21 untergebrachten Batterien gespeist werden. Zwei starr an der Achse 21 befestigte Stangen 23 sind an ihren freien Enden 24 nach außen und oben gewinkelt und durch eine Meßeinheit 25 verbunden, an die sich eine mit einem Griff 26 versehene Zugstange 27 anschließt. In zwei Gelenken 28 ist ferner ein Tragbügel 29 an der Achse 21 angebracht. Er ist in der gezeichneten Stellung mit über die Gelenke 28 hinausragenden Enden an der Achse 21 abgestützt und kann an die Stangen 23 herangeschwenkt werden.
Ein Golfsack läßt sich, mit seinem Boden abgestützt auf einem nach oben abgewinkelten Endabschnitt 30 des Tragbügels 29, auf einem kurz darüber angebrachten Riemen 31 und zwischen den Enden 24 der Stangen 23 auf- bzw. einlegen.

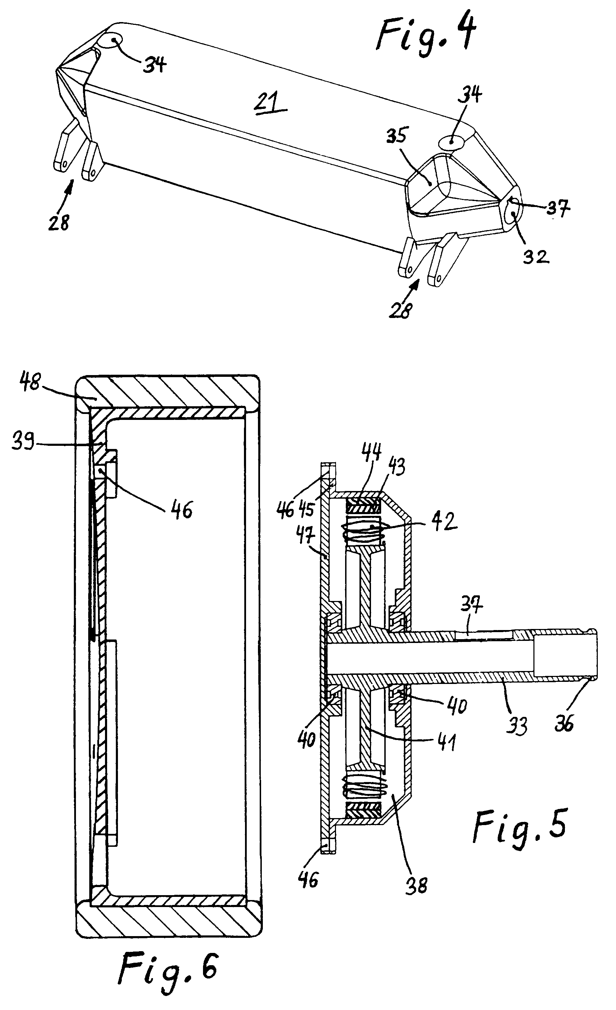

Fig. 4 zeigt die kastenförmige Achse 21 mit der Abwandlung, daß die Enden des Kastens etwa pyramidenförmig verjüngt sind. Damit ergibt sich ein günstiger Kräftefluß mit jeweils einer in der Verjüngung ausgebildeten Aufnahme 32 für einen Achsstummel 33 eines' der beiden Räder 22.
Bei 34 sind die Ansätze der Stangen 23 dargestellt, daneben Einbuchtungen 35.

Wie Fig. 5 erkennen läßt, hat der in die Aufnahme 32 einzuschiebende Achsstummel 33 am Ende eine Rastverbindung 36 in der Aufnahme 32 und im übrigen eine Drehmomentsicherung in Form einer Nut-Feder-Verbindung, von der in der Zeichnung die Nuten 37 erscheinen.

Das Rad 22 hat damit eine mechanische Steckverbindung. Eine mit dieser kombinierte Steckverbindung für die erforderlichen elektrischen Anschlüsse ist nicht gezeichnet.

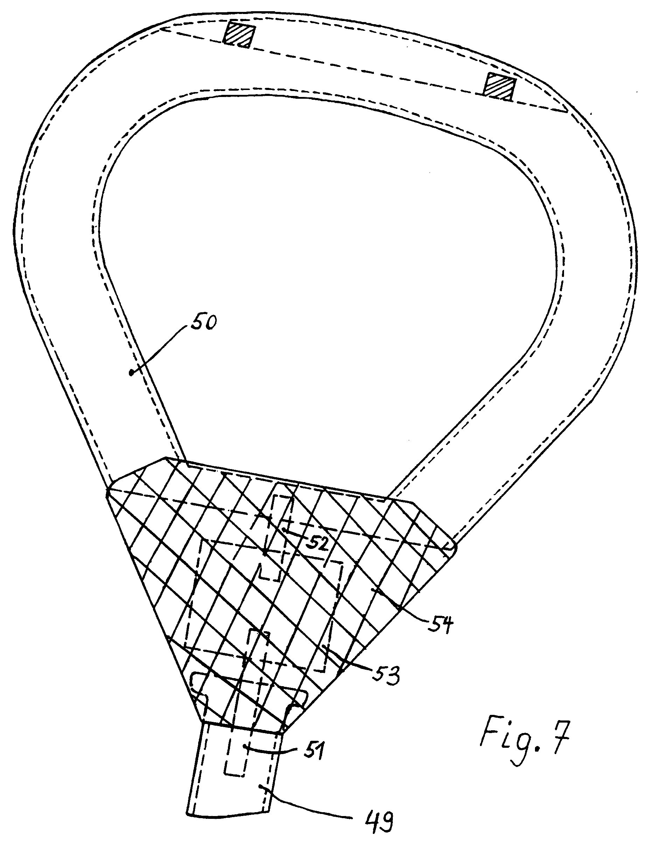

Das Rad 22 gliedert sich in einen in Fig. 5 dargestellten Radkern 38 und ein in Fig. 6 dargestelltes Außenteil 39.
Der Radkern besteht aus einem mit Lagern 40 auf dem Achsstummel 33 drehbar gelagerten Gehäuse, in dem auf einer einteilig mit dem Achsstummel 33 ausgebildeten Statorscheibe 41 eine umlaufende Reihe von Feldpolen 42 und dieser gegenüber an dem drehbaren Gehäuse eine Magnetreihe 43 mit einem Rückschlußring 44 angeordnet ist.

Das Außenteil 39 greift mit einem zentrierenden Sitz auf den Radkern 38 und hat mit diesem jeweils an einem radialen Vorsprung 45 mehrere, an den betreffenden Bohrungen 46 erkennbare, Schraubverbindungen, mit denen zugleich ein Gehäusedeckel 47 des Radkernes 38 befestigt wird. Der Außenteil 39 trägt einen elastischen Reifen 48.

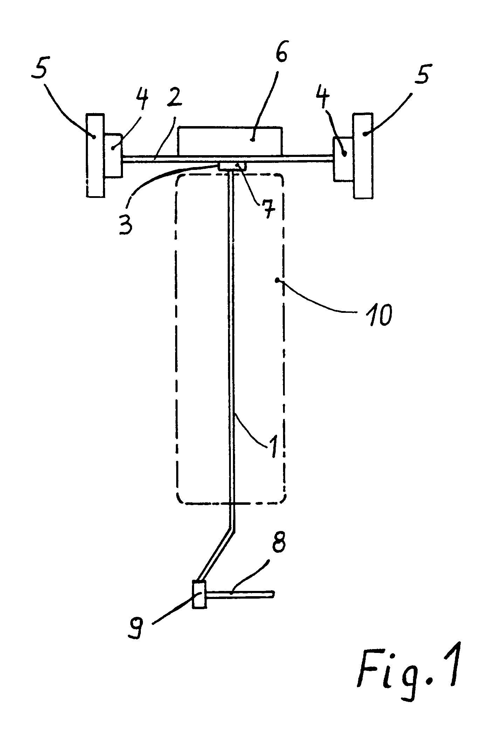

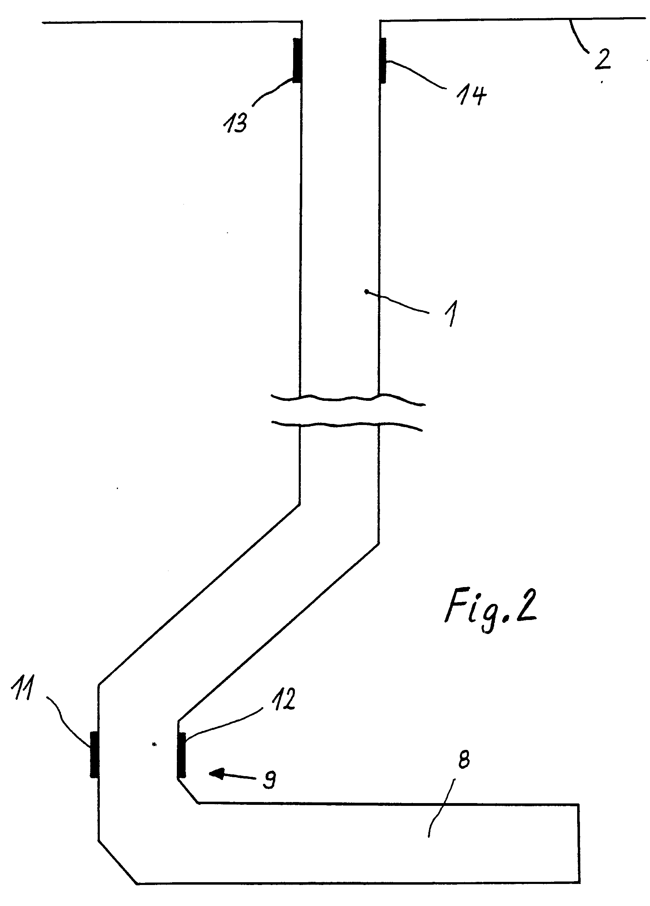

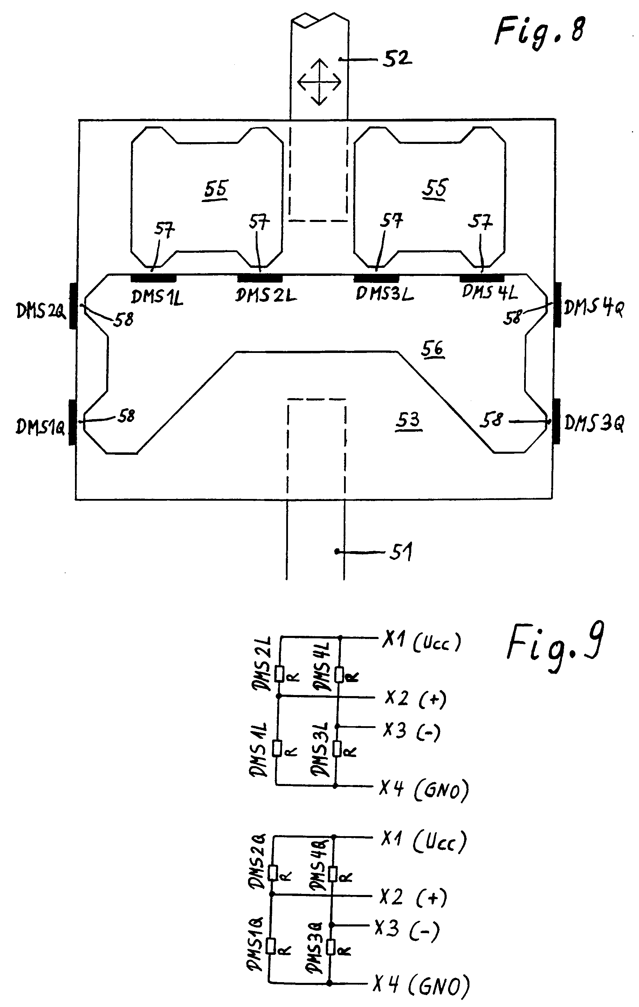

Die Funktion des Antriebes des Golfkarrens gemäß Fig. 3 bis 6 ist die gleiche wie bei dem Golfkarren gemäß Fig. 1 und 2. Die Dehnmeßstreifen sind lediglich in die Meßeinheit 25 und die Steuerung ist in den Kasten der Achse 21 verlegt.
Eine Meßeinheit, mit der die Meßeinheit 25 ähnlich zu denken ist, findet sich in Fig. 7 und 8.

Fig. 7 läßt eine Zugstange 49 und einen ringförmigen Griff 50 erkennen, die mittels Bolzen 51 und 52 über einen Formkörper 53 sowie durch eine diese Anordnung umschließende Einbettung 54 aus Kunststoffmasse miteinander verbunden sind.

Der Formkörper 53 ist in Fig. 8 in größerem Maßstab für sich gezeichnet.

Er besteht im ganzen aus einem flachen Quader aus Aluminium, in dem durch Ausnehmungen 55 und 56 vier Stege 57 und vier Stege 58 gebildet sind. An den Stegen 57 sind vier mit DMS 1L bis DMS 4L bezeichnete Dehnmeßstreifen angebracht, an den Stegen 58 vier mit DMS 1Q bis DMS 3Q bezeichnete Dehnmeßstreifen.

Entsteht Zug zwischen den Bolzen 51 und 52, werden DMS 1L und DMS 4L gedehnt und DMS 2L und DMS 3L gestaucht. Bei Druck werden DMS 2L und DMS 3L gedehnt und DMS 1L und DMS 4L gestaucht. Querkraft des Bolzens 52 gegenüber dem Bolzen 51 nach rechts dehnt DMS 1Q und DMS 4Q und staucht DMS 2Q und DMS 3Q. Querkraft nach links dehnt DMS 2Q und DMS 3Q und staucht DMS 1Q und DMS 4Q. Durch eine Brückenschaltung der Dehnmeßstreifen DMS 1L bis DMS 4L läßt sich die Längskraft messen, durch eine Brückenschaltung der Dehnmeßstreifen DMS 1Q bis DMS 4Q die Querkraft. Mit der Messung der Längskraft werden die an der Zugstange 49 wirksamen Zug- oder Schubkräfte ermittelt. Mit der Messung auch der Querkraft zwischen den Bolzen 51 und 52, d.h. zwischen dem Griff 50 und der Zugstange 49, wird auch das von dem bzw. auf das Vorrichtungsgestell übertragene Drehmoment erfaßt.

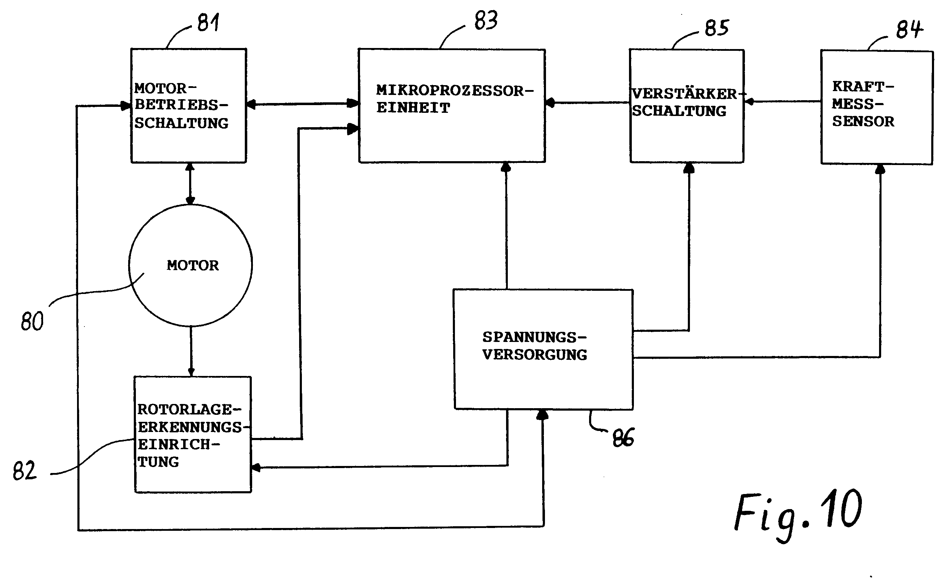

Die Anordnung der Dehnmeßstreifen DMS1L bis DMS4L und DMS1Q bis DMS4Q in der jeweiligen Brückenschaltung läßt sich der Fig. 9 entnehmen. Mit X2 und X3 sind in jeder der dort gezeigten Brückenschaltungen Anschlüsse für die Abnahme eines Meßsignals bezeichnet. X1 und X4 kennzeichnen in beiden Brückenschaltungen eine Anschlußverbindung zu einer Spannungsquelle (Ucc) bzw. zur Masse (GND). Wie aus der Fig. 9 hervorgeht, sind die einzelnen Dehnmeßstreifen DMS1L bis DMS4L bzw. DMS1Q bis DMS4Q jeweils in einer solchen Weise zu einer Brücke zusammengeschaltet, daß die in einander entsprechenden Brückenzweigabschnitten vorgesehenen Dehnmeßstreifen bei Betätigung der Zugstange 49 im entgegengesetzten Sinn verformt werden. Dementsprechend ergibt sich auch eine entgegengesetzte Änderung des Widerstandsverhältnisses der Dehnmeßstreifen in den beiden Brückenzweigen, was zu einem hohen Verstimmungsgrad der Meßbrücke und damit im Vergleich zu einer Meßbrücke mit insgesamt nur zwei, in einem Brückenzweig vorgesehenen Dehnmeßstreifen zu einer höheren Meßempfindlichkeit führt.

Weitere, insbesondere die Motorsteuerung betreffende Einzelheiten werden nun anhand der Fig. 10 erläutert. In dem dort gezeigten Schema ist mit dem Bezugszeichen 80 ein Antriebsmotor bezeichnet, bei dem es sich vorzugsweise um einen Drehstromsynchronmotor handelt, wie er in der vorangehenden Beschreibung bereits erwähnt wurde. Der Antriebsmotor 80 steht mit einer Motorbetriebsschaltung 81 zur unmittelbaren Ansteuerung des Motors 80 in Verbindung. Über die Betriebsschaltung 81 wird der Motor 80 mit einer geeignet gesteuerten Betriebsspannung versorgt. Darüber hinaus wird über die Motorbetriebsschaltung 81 die Betriebsweise des Motors, der sowohl als Motor als auch als Generator verwendet werden kann, gesteuert.

Der Motor 80 steht ferner mit einer Rotorlage-Erkennungseinrichtung 82 in Verbindung, welche ständig Meßsignale erzeugt, aus denen sich die jeweilige Winkelposition des Rotors ermitteln läßt. Die Rotorlage-Erkennungseinrichtung 82 ist mit einer Mikroprozessoreinheit 83 verbunden, welche die erzeugten Meßsignale empfängt. Die als zentrale Steuereinrichtung dienende Mikroprozessoreinheit 83 ist ferner mit der Motorbetriebsschaltung 81 verbunden, wobei die Mikroprozessoreinheit 83 nicht nur Signale zur Steuerung der Motorbetriebsschaltung liefert, sondern auch, wie später noch erläutert wird, von der Motorbetriebsschaltung Signale empfängt. Der zwischen der Motorbetriebsschaltung 81 und der Mikroprozessoreinheit 83 eingezeichnete Doppelpfeil soll auf diesen beiderseitigen Signalaustausch hinweisen.

Mit dem Bezugszeichen 84 ist in der Fig. 10 ein Kraftmeßsensor bezeichnet, bei dem es sich vorzugsweise um eine der vorangehend beschriebenen Meßanordnungen auf der Basis von Dehnmeßstreifen und insbesondere um einen Meßkörper mit wenigstens einem Satz aus vier zu einer Meßbrücke zusammengeschalteten Dehnmeßstreifen gemäß den Figuren 8 und 9 handelt. Die Ausgangssignale des Kraftmeßsensors 84 werden über eine Verstärkerschaltung 85 der Mikroprozessoreinheit 83 zugeführt.

Eine in der Fig. 10 ferner gezeigte Spannungsversorgung 86 enthält in dem hier beschriebenen Ausführungsbeispiel einen Akkumulator und einen durch den Akkumulator gespeisten Schaltspannungsregler für die Erzeugung konstanter Versorgungsspannungen. Wie der Fig. 10 zu entnehmen ist, liefert die Spannungsversorgung 86 Betriebsspannungen an alle beschriebenen Funktionseinheiten 81 bis 85, wobei umgekehrt in Fällen, in denen der Motor 80 als Generator arbeitet, der Spannungsversorgung 86 über die Motorbetriebsschaltung 81 auch eine Spannung zugeführt wird, die den Akkumulator lädt.

In dem hier beschriebenen Ausführungsbeispiel enthält die Spannungsversorgung eine Zusatzschaltung, die auf eine anfängliche Generatorspannung des Motors 80 reagiert und den Schaltspannungsregler und damit über die einsetzende Betriebsspannungserzeugung die anderen Funktionsgruppen 81 bis 85 in Betrieb bzw. Betriebsbereitschaft setzt. Eine solche anfängliche Generatorspannung wird erzeugt, wenn eine den beschriebenen Hilfsantrieb verwendende fahrbare Vorrichtung, z.B. ein Golfkarren, in Bewegung gesetzt wird. In diesem Fall braucht der Benutzer der Vorrichtung zur Herstellung der Betriebsbereitschaft keinen Schalter zu betätigen. Durch die automatische Einschaltung erfordert der Hilfsantrieb also keinerlei besondere Aufmerksamkeit.

Im Fahrbetrieb liegt das verstärkte Signal des Kraftmeßsensors 84 am Mikroprozessor 83 zur Verarbeitung ständig an und wird entsprechend der Programmierung der Mikroprozessoreinheit abgefragt und verarbeitet. Der Mikroprozessor vergleicht das Meßsignal des Kraftmeßsensors mit einem vorgegebenen Sollwert und berechnet zur Einregelung des Sensorsignals auf den Sollwert verwendbare Steuersignale. Diese Steuersignale werden der Motorbetriebsschaltung 81 zugeführt, um Motorbetriebsspannungen liefernde Endstufen der Motorbetriebsschaltung zu steuern, so daß der Motor entsprechend der vorzunehmenden Regelung sein Drehmoment verändert. Liegt die zur Bewegung der fahrbaren Vorrichtung tatsächlich aufzuwendende Zug- oder Schubkraft über einer vorgegebenen, von einem Benutzer aufzuwendenden Zug- oder Schubkraft, so erfolgt durch Erhöhung des Drehmoments des Antriebsmotors eine Entlastung und der Kraftmeßsensor gibt ein entsprechend verringertes Signal ab. Gemäß der Regelung erfolgt die Entlastung soweit, daß eine Übereinstimmung zwischen dem vorgegebenen Sollwert und dem von der Mikroprozessoreinheit empfangenen Kraftmeßsensorsignal erreicht wird. Unterschreitet hingegen die aufzuwendende Zug- oder Schubkraft die vorgegebene Zug- oder Schubkraft, so daß beim Vergleich in der Mikroprozessoreinheit 83 eine Unterschreitung des Sollwertes festgestellt wird, so berechnet die Mikroprozessoreinheit 83 Steuersignale für einen Betrieb des Motors 80 als Generator, so daß der Motor eine zur Ausregelung der Sollwertabweichung geeignete Bremskraft erzeugt.

Bei Verwendung eines Drehstromsynchronmotors berechnet der Mikroprozessor 83 die Steuersignale zur Steuerung der Phasen der Motorbetriebsspannungen in geeigneter zeitlicher Folge unter Einbeziehung von Meßsignalen der Rotorlage-Erkennungseinrichtung, aus denen die Mikroprozessoreinheit die Winkellage des Rotors berechnet. Die Berechnung der der Motorbetriebsschaltung 81 zugeführten Steuersignale erfolgt also auf der Grundlage der jeweiligen Rotorposition, wodurch es ermöglicht wird, jederzeit die entsprechend der Rotorposition optimale Lage des Drehfeldes einzustellen und damit ein maximales Angriffsmoment am Rotor zu gewährleisten.

Die Rotorlage-Erkennungseinrichtung umfaßt vorzugsweise zwei analoge Hallgeneratoren, die mit Hilfe der Rotormagneten oder einer zusätzlichen Magnetanordnung zwei gegeneinander um 90° versetzte Signale erzeugen. Aufgrund der so erzielten Orthogonalität der Signale läßt sich mit Hilfe einer mathematischen Funktion der Gestalt $\alpha = \arctan (a/b)$ daraus der magnetische Rotorwinkel in quasi-linearer Form, d.h. mit hoher Auflösung und äußerst kurzer Erfassungszeit berechnen.

Aus den von der Rotorlage-Erkennungseinrichtung in hoher zeitlicher Auflösung ständig gelieferten Lagesignalen lassen sich alle weiteren Systemgrößen, wie z.B. die Drehgeschwindigkeit, des Rotors ermitteln. Zur Ermittlung der Drehgeschwindigkeit differenziert die Mikroprozessoreinheit 83 den ermittelten Lagewinkel des Rotors nach der Zeit. In dem hier beschriebenen Ausführungsbeispiel erfolgt die Motorsteuerung ausschließlich programmgesteuert über die Mikroprozessoreinheit, d.h. die Motorcharakteristik ist durch die Software, mit der die Mikroprozessoreinheit betrieben wird, bestimmt. Diese Softwarelösung ermöglicht eine hocheffiziente, auch bei schnellem Wechsel der Zug- oder Schublast schnell ansprechende Regelung. Der Benutzer einer mit dem Hilfsantrieb ausgerüsteten fahrbaren Vorrichtung hat den Eindruck, daß die Vorrichtung einer Bewegung, unabhängig davon, ob die Bewegung beschleunigt, verzögert, bergauf oder bergab erfolgt, stets den gleichen Widerstand entgegensetzt und daß sich die Vorrichtung dabei weitgehend ruckfrei bewegen läßt.

Die Rotorlage-Erkennungseinrichtung umfaßt in dem hier beschriebenen Ausführungsbeispiel über die Statormagneten oder eine zusätzliche Magnetanordnung angesteuerte Hallgeneratoren, aus deren Signalen die Mikroprozessoreinheit 83 die Winkellage des Rotors jeweils bestimmen kann. Zur Winkellagebestimmung könnte allerdings auch ein ohnehin in einem Drehstrommotor integrierter Geber, der Zählimpulse liefert, verwendet werden, wobei die Positionsbestimmung durch die Mikroprozessoreinheit programmgesteuert über eine Aufwärts- und Abwärtszählung erfolgen könnte.

In dem gezeigten Ausführungsbeispiel empfängt die Mikroprozessoreinheit 83 etwaige Fehlersignale von den Endstufen der Motorbetriebsschaltung 81, durch die im Falle einer Störung eine Sicherheitsabschaltung des Hilfsantriebs ausgelöst werden kann.

Sofern wie in den vorangehend gezeigten Ausführungsbeispielen jeweils zwei in Räder integrierte Antriebsmotoren vorgesehen sind, berechnet der Mikroprozessor die der Motorbetriebsschaltung 81 zugeführten Steuersignale getrennt für jeden Motor, wobei neben den Rotorlagepositionen auch die aus Rotorlagepositionen berechneten Motordrehzahlen sowie für Querkräfte repräsentative Signale des Kraftmeßsensors bei der Berechnung der Steuersignale einbezogen werden können. Damit werden unterschiedliche Laufwege und Drehgeschwindigkeiten der Räder berücksichtigt. Bei einem Golfwagen mit zwei Rädern läßt es sich entsprechend der beschriebenen Regelung zusätzlich erreichen, daß ein Verdrehen des Karrens, und insbesondere ein Verdrehen auf der Stelle, unter Anwendung eines verhältnismäßig geringen, vom Benutzer aufzubringenden Drehmoments möglich ist, indem auch die Drehung als solche durch den Hilfsantrieb unterstützt wird. Beim Drehen auf der Stelle würde der Hilfsantrieb die Räder dann in entgegengesetzten Drehrichtungen antreiben.

Die Programmsteuerung der Mikroprozessoreinheit 83 könnte derart vorgesehen sein, daß der Sollwert abhängig von der Motordrehzahl und damit abhängig von der Geschwindigkeit der fahrbaren Vorrichtung derart verändert wird, daß der Benutzer unabhängig von der Geschwindigkeit, mit der er die Vorrichtung bewegt, stets die gleiche Leistung aufbringen muß. Bei größerer Geschwindigkeit müßte also die vom Benutzer aufzubringende Antriebskraft verringert werden. Die Mikroprozessoreinheit 83 könnte ferner mit einer Eingabeeinheit verbunden sein, über die sich die aufzubringende Antriebskraft wie gewünscht einstellen läßt.

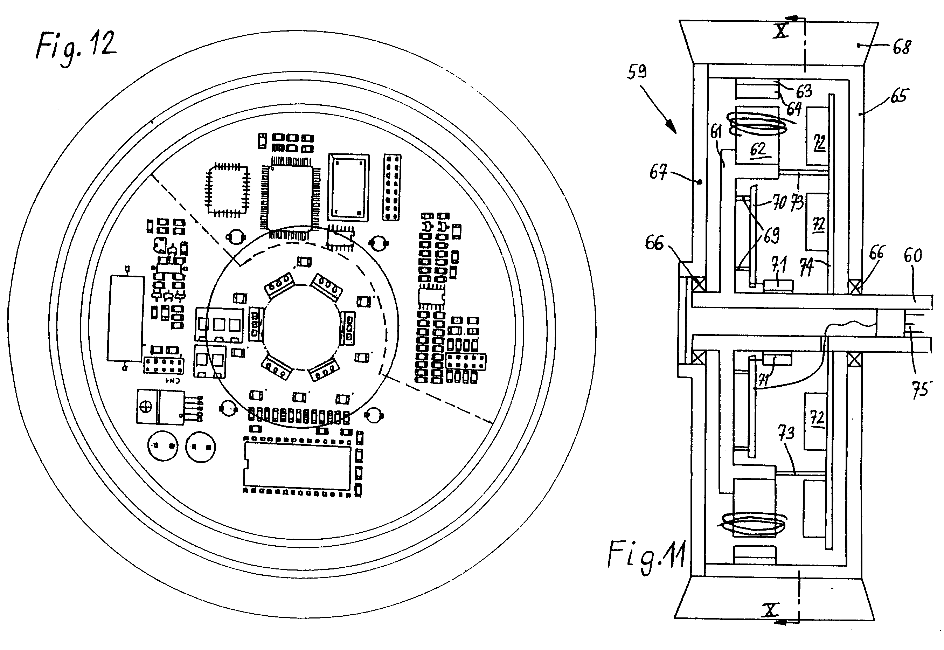

Fig. 11 und 12 zeigen ein Rad 59 mit über den Motor hinaus integrierten Batterien und integrierter Steuerung.
Der Motor hat im Prinzip den gleichen Aufbau wie in Fig. 5: Eine einteilig mit einem Achsstummel 60 ausgebildete Statorscheibe 61 trägt eine Reihe von Statoren 62, denen ein mit einem Polring 63 versehener Kranz von Magneten 64 am, als Gehäuse 65 gestalteten, drehenden Teil des Rades 59 zugeordnet ist. Das Gehäuse 65 ist mit Lagern 66 auf dem Achsstummel 60 angeordnet; seine eine Wand besteht aus einem abnehmbaren Gehäusedeckel 67. Ein Reifen 68 sitzt hier unmittelbar auf dem Gehäuse 65.

Mittels Stiften 69 ist mit etwas Abstand eine ringförmige Platine 70 an der Statorscheibe 61 befestigt. Sie trägt oberhalb der gestrichelten Linie in Fig. 12 die Steuerelektronik und unterhalb der gestrichelten Linie die Leistungselektronik einschließlich an dem Achsstummel 60 anliegender Leistungstransistoren 71.
Die Batterien 72 sind an einer auf dem Achsstummel 60 sitzenden und durch Stege 73 mit der Statorscheibe 61 verbundenen Trägerplatte 74 angebracht.

An dem Achsstummel 60 sind ähnlich wie an dem Achsstummel 33 Vorkehrungen für eine mechanische Steckverbindung des Rades 59 mit einem Vorrichtungsgestell zu denken. Kombiniert damit ist eine elektrische Steckverbindung 75, die den Anschluß an die Meßvorrichtung vermittelt.

Das Rad 59 ist beispielsweise für ein Flurfördergerät vorgesehen.

## Patentansprüche

1. Fahrbare Vorrichtung, welche zum Fahrantrieb primär durch Muskelkraft, insbesondere Zug- oder Schubkraft, vorgesehen ist, und einen
elektrischen Hilfsantrieb (4-6;21,22;59) aufweist, der unter Erzeugung eines Antriebsmoments unterstützend wirksam ist, wenn eine erforderliche Antriebskraft einen vorgegebenen Wert einer auszuübenden primären Muskelantriebskraft überschreitet, und
unter Erzeugung eines Bremsmoments generatorisch wirksam ist, wenn die erforderliche Antriebskraft den Wert unterschreitet, und der
eine Einrichtung (9;25;51-58) zum Messen der ausgeübten primären Muskelantriebskraft und eine Steuerung (7;70) zum Einregeln des Meßwertes auf den vorgegebenen Wert durch Änderung des Antriebs- oder Bremsmoments umfaßt.

2. Vorrichtung nach Anspruch 1,
dadurch gekennzeichnet,
daß der vorgegebene Wert der primären Muskelantriebskraft willkürlich und/oder durch ein Steuerprogramm veränderbar ist.

3. Vorrichtung nach Anspruch 1 oder 2,
dadurch gekennzeichnet,
daß der Hilfsantrieb (4-6;21,22;59) mindestens einen Drehstromsynchronmotor (4;41-44;61-64) aufweist, der unterstützend wie auch generatorisch wirksam ist.

4. Vorrichtung nach einem der Ansprüche 1 bis 3,
dadurch gekennzeichnet,
daß zwei gleichachsige Räder (5;22) jeweils mit einem Motor (4;41-44) versehen und gesondert gesteuert sind, wobei die auf die verschiedenen Räder (5;22) entfallenden Anteile der ausgeübten primären Muskelantriebskraft aus einer Messung (13,14;25;DMS 1Q-DMS 4Q) eines in einem Vorrichtungsgestell (3;23,27;49,50) auftretenden Biegemoments oder einer Querkraft ermittelt werden.

5. Vorrichtung nach einem der Ansprüche 1 bis 4,
dadurch gekennzeichnet,
daß zwei Räder (22) mit getriebelos integrierten Motoren (41-44) an einer Achse (21) von der Form eines langgestreckten Kastens angeordnet sind, in dem die Batterieen untergebracht sind.

6. Vorrichtung nach einem der Ansprüche 1 bis 4,

dadurch gekennzeichnet,
daß die Räder (59), vorzugsweise getriebelos, mit integrierten Motoren (61-64) ausgerüstet sind und mit jeweils eigenen, integrierten Batterien (72), vorzugsweise ferner mit ihrer zugehörigen Steuerung (70).

7. Vorrichtung nach Anspruch 5 oder 6,
dadurch gekennzeichnet,
daß die Räder (22;59) auf Achsstummeln (33;60) angeordnet sind, die mittels drehsicherer Steckverbindungen (36,37) zu befestigen sind, die mit Steckverbindungen (75) für in das Rad (22;59) führende Steuerleitungen, ggf. außerdem Versorgungsleitungen, kombiniert sind.

8. Vorrichtung nach einem der Ansprüche 1 bis 7,
dadurch gekennzeichnet,
daß zur Messung der ausgeübten primären Muskelantriebskraft, ggf. ferner des Biegemomentes oder der Querkraft, die Meßeinrichtung (9;25;51-58) in einem Vorrichtungsgestell (3;23,27;49,50) angeordnet ist an einem Punkt, vorzugsweise einem Knotenpunkt der Gestellkonstruktion, durch den der gesamte Kraftfluß der ausgeübten primären Muskelantriebskraft verläuft, vorzugsweise zwischen einem Handgriff (8;50) und einer Zugstange (1;49) oder am anderen Ende der Zugstange (27).

9. Vorrichtung nach Anspruch 8,
dadurch gekennzeichnet,
daß die Meßeinrichtung (51-58) aus einem, vorzugsweise in eine Kunststoffmasse (54) eingebetteten, Formkörper (53) besteht, an dem durch Ausnehmungen (55;56) verstärkt biegebeanspruchte Stege (57;58) geschaffen sind, an denen Dehnmeßstreifen (DMS 1L-DMS 4L; DMS 1Q-DMS 4Q) angebracht sind.

10. Vorrichtung nach einem der Ansprüche 1 bis 9,
dadurch gekennzeichnet,
daß die Meßeinrichtung (9;51-58) Paare von Dehnmeßstreifen (11/12;DMS 1L/DMS 2L;DMS 3L/DMS 4L;DMS 1Q/DMS 2Q;DMS 3Q/DMS 4Q) aufweist, die nebeneinander derart angeordnet sind, daß der eine Dehnmeßstreifen gedehnt wird, wenn der andere gestaucht wird, und die in einer Brückenschaltung mit einem zwischen ihnen liegenden Abgriffspunkt angeordnet sind.

11. Vorrichtung nach Anspruch 9,
dadurch gekennzeichnet,
daß die Einbettung (54) gleichfalls kraftübertragend in die Gestellkonstruktion (49;50) eingebunden ist.

12. Vorrichtung nach den Ansprüchen 5 und 8,
dadurch gekennzeichnet,
daß die fahrbare Vorrichtung ein Golfwagen ist, wobei der genannte Kasten (21) als Zentralkörper einer Halterung (23,29) für den Golfsack angeordnet ist mit zwei starr von ihm ausgehenden, konvergierenden, am Ende nach oben und auseinander gewinkelten Stangen (23), die durch eine an ihrem Ende mit einem Griff (26) versehene Zugstange (27) fortgesetzt sind, und einem in zwei Gelenken (26) an ihm befestigten, aus einer Stützstellung an die beiden Stangen (23) heranklappbaren Tragbügel (29), und daß die Meßeinrichtung (25) am Übergang zwischen den genannten Stangen (23) und der Zugstange (27) oder zwischen dieser und dem Handgriff angeordnet ist.

13. Vorrichtung nach Anspruch 10,
dadurch gekennzeichnet,
daß die Brückenschaltung durch zwei Paare von Dehnmeßstreifen (DMS1L/DMS2L, DMS3L/DMS4L; DMS1Q/DMS2Q, DMS3Q/DMS4Q) gebildet ist, wobei in der Brückenschaltung zueinander diagonal angeordnete Dehnmeßstreifen beide entweder gedehnt oder gestaucht sind.

14. Vorrichtung nach einem der Ansprüche 1 bis 13,
dadurch gekennzeichnet,
daß eine auf der Generatorspannung des Motors (4;41-44;80) ansprechende Startschaltung zur Herstellung der Betriebsbereitschaft des Hilfsantriebs vorgesehen ist.

15. Vorrichtung nach einem der Ansprüche 3 bis 14,
dadurch gekennzeichnet,
daß die Steuerung (7;70;81-83) eine ein Signal der Meßeinrichtung (9;25;51-58;84-85) empfangende Mikroprozessoreinheit (83), eine mit der Mikroprozessoreinheit (83) verbundene Motorbetriebsschaltung (81) mit Motorbetriebsspannungen liefernden Endstufen und eine Einrichtung zur Ermittlung der Rotorwinkellage im Motor (4;41-44;80) umfaßt, wobei die Mikroprozessoreinheit (83) zur Berechnung von der Motorbetriebsschaltung (81) zuzuführenden Steuersignalen unter Einbeziehung der ermittelten Rotorwinkellage vorgesehen ist.

16. Vorrichtung nach einem der Ansprüche 1 bis 15,
dadurch gekennzeichnet,
daß die Steuerung (7;70;81-83) zur Verstellung der vorgegebenen primären Muskelantriebskraft derart vorgesehen ist, daß ein Benutzer der fahrbaren Vorrichtung unabhängig von deren Geschwindigkeit eine konstante Antriebsleistung aufzubringen hat.

**Claims**

1. Travelling device, which is intended for being driven primarily by muscular strength, in particular pulling or pushing power, and has an electric auxiliary drive (4-6;21,22;59), which has a boosting effect, generating a driving torque, whenever a required driving force exceeds a predetermined value of a primary muscular driving force to be exerted, and has a regenerative effect, generating a braking torque, whenever the required driving force drops below the value, and which comprises a device (9;25;51-58) for measuring the exerted primary muscular driving force and a control (7;70) for adjusting the measured value to the predetermined value by altering the driving or braking torque.

2. Device according to Claim 1, characterized in that the predetermined value of the primary muscular driving force can be changed arbitrarily and/or by a control program.

3. Device according to Claim 1 or 2, characterized in that the auxiliary drive (4-6;21,22;59) has at least one three-phase synchronous motor (4;41-44;61-64) which has a booster effect and a regenerative effect.

4. Device according to one of Claims 1 to 3, characterized in that two coaxial wheels (5;22) are in each case provided with a motor (4; 41-44) and are separately controlled, the proportions of the exerted primary muscular driving force going to the different wheels (5;22) being determined from a measurement (13,14;25;DMS 1Q-DMS 4Q) of a bending moment or a transverse force occurring in a device frame (3;23,27;49,50).

5. Device according to one of Claims 1 to 4, characterized in that two wheels (22) with gearlessly integrated motors (41-44) are arranged on an axle (21) of the form of an elongate case, in which the batteries are housed.

6. Device according to one of Claims 1 to 4, characterized in that the wheels (59) are equipped, preferably gearlessly, with integrated motors (61-64) and with in each case their own, integrated batteries (72), preferably furthermore with their associated control (70).

7. Device according to Claim 5 or 6, characterized in that the wheels (22;59) are arranged on axle journals (33;60) which can be fastened by means of rotationally secure plug connections (36,37), which are combined with plug connections (75) for control lines leading into the wheel (22;59), if appropriate also with supply lines.

8. Device according to one of Claims 1 to 7, characterized in that, for measuring the exerted primary muscular driving force, if appropriate also the bending moment or the transverse force, the measuring device (9;25;51-58) is arranged in a device frame (3;23,27;49,50) at a point, preferably a crosspoint of the frame structure, through which the entire flow of force of the exerted primary musclar driving force runs, preferably between a handle (8;50) and a draw bar (1;49) or at the other end of the draw bar (27).

9. Device according to Claim 8, characterized in that the measuring device (51-58) comprises a moulding (53) which is preferably embedded in a plastics compound (54) and on which clearances (55;56) are used to create webs (57;58) where bending stresses are concentrated, to which strain gauges (DMS 1L-DMS 4L; DMS 1Q-DMS 4Q) are attached.

10. Device according to one of Claims 1 to 9, characterized in that the measuring device (9;51-58) has pairs of strain gauges (11/12; DMS 1L/DMS 2L; DMS 3L/DMS 4L; DMS 1Q/DMS 2Q; DMS 3Q/DMS 4Q) which are arranged next to one another in such a way that the one strain gauge is stretched when the other is compressed, and which are arranged in a bridge circuit with a tapping point lying between them.

11. Device according to Claim 9, characterized in that the embedding (54) is likewise incorporated in a force-transmitting manner into the frame structure (49;50).

12. Device according to Claims 5 and 8, characterized in that the travelling device is a golf caddie, the said case (21) is arranged as a central body of a mounting (23,29) for the golf bag, having two bars (23) extending rigidly from it, which converge, at the end are angled upwards and away from each other and are continued by a draw bar (27) which at its end is provided with a handle (26), and having a carrying rack (29) which is fastened at two joints (26) on it and can be swung out of a supporting position up against the two bars (23), and in that the measuring device (25) is arranged at the transition between the said bars (23) and the draw bar (27) or between the latter and the handle.

13. Device according to Claim 10, characterized in that the bridge circuit is formed by two pairs of strain gauges (DMS 1L/DMS 2L, DMS 3L/DMS 4L; DMS 1Q/DMS 2Q, DMS 3Q/DMS 4Q), strain gauges arranged diagonally with respect to each other in the bridge circuit both being either stretched or compressed.

14. Device according to one of Claims 1 to 13, characterized in that a starting circuit responding to the generator voltage of the motor (4;41-44;80) is provided for establishing the operational readiness of the auxiliary drive.

15. Device according to one of Claims 3 to 14, characterized in that the control (7;70;81-83) comprises a microprocessor unit (83), receiving a signal of the measuring device (9;25;51-58;84-85), a motor operating circuit (81), connected to the microprocessor unit (83) and having output stages supplying motor operating voltages, and a device for determining the angular position of the rotor in the motor (4;41-44;80), the microprocessor unit (83) being provided for the calculation of control signals to be fed to the motor operating circuit (81), with inclusion of the determined angular position of the rotor.

16. Device according to one of Claims 1 to 15, characterized in that the control (7;70;81-83) is provided for adjusting the predetermined primary muscular driving force in such a way that a user of the travelling device has to apply a constant driving power irrespective of the speed of said device.

**Revendications**

1. Dispositif mobile, qui est principalement déplacé par la force musculaire, en particulier une force de traction ou de poussée, et qui présente une commande auxiliaire électrique (4-6;21,22;59), qui agit en assistant par la réalisation d'un couple d'entraînement, lorsqu'une force d'entraînement nécessaire dépasse une valeur définie d'une force d'entraînement musculaire principale à excercer et qui agit en générant un couple de freinage lorsque la force d'entraînement nécessaire est inférieure à la valeur et qui comprend un dispositif (9; 25; 51-58) pour la mesure de la force d'entraînement musculaire principale exercée et d'un dispositif de commande (7; 70) pour le réglage de la valeur de mesure à la valeur définie par modification du couple d'entraînement ou de freinage.

2. Dispositif selon la revendication 1, caractérisé en ce que la valeur définie de la force d'entraînement musculaire principale peut être modifiée de manière arbitraire et/ou par un programme de commande.

3. Dispositif selon la revendication 1 ou 2, caractérisé en ce que la commande auxiliaire (4-6; 21, 22; 59) présente au moins un moteur synchrone triphasé (4; 41-44; 61-64) qui agit en assistant ainsi qu'en générant.

4. Dispositif selon une quelconque des revendications 1 à 3, caractérisé en ce que deux roues (5; 22) présentant le même axe sont chacune équipées d'un moteur (4; 41-44) et entraînées séparément, les parties de la force d'entraînement musculaire principale exercée qui sont appliquées aux différentes roues (5; 22) étant déterminées par une mesure (13, 14; 25; DMS 1Q-DMS 4Q) d'un couple de flexion ou d'une force transversale produit dans un bâti du dispositif (3; 23, 27; 49, 50).

5. Dispositif selon une quelconque des revendications 1 à 4, caractérisé en ce que deux roues (22) sont disposées avec des moteurs (41-44) intégrés à entraînement direct sur un axe (21) ayant la forme d'un caisson allongé dans lequel sont logés les accumulateurs.

6. Dispositif selon une quelconque des revendications 1 à 4, caractérisé en ce que les roues (59), de préférence à entraînement direct, sont équipées de moteurs intégrés (61-64) et chaque fois d'accumulateurs (72) intégrés propres, et de préférence également d'un dispositif de commande (70) propre.

7. Dispositif selon la revendication 5 ou 6, caractérisé en ce que les roues (22; 59) sont disposées sur des fusées d'essieu (33; 60) qui peuvent être fixées à l'aide de connecteurs (36, 37) qui ne pivotent pas, combinés à des connecteurs (75) pour des fils conducteurs de commande guidés dans la roue (22;59), le cas échéant également pour des fils conducteurs d'alimentation.

8. Dispositif selon une quelconque des revendications 1 à 7, caractérisé en ce qu'on a disposé le dispositif de mesure (9; 25; 51-58) pour la mesure de la force d'entraînement musculaire principale exercée, le cas échéant également du couple de flexion ou de la force transversale, dans un bâti (3; 23, 27; 49, 50) du dispositif en un point, de préférence en un point de jonction de la construction du bâti, à travers lequel passe toute la puissance de la force d'entraînement musculaire principale exercée, de préférence entre une poignée (8; 50) et une barre de traction (1; 49) ou à l'autre extrémité de la barre de traction (27).

9. Dispositif selon la revendication 8, caractérisé en ce que le dispositif de mesure (51-58) est constitué par un corps moulé (53) de préférence incorporé dans une masse de matière synthétique (54), sur lequel on a réalisé des âmes (57, 58) sollicitées en flexion plus fortement, par des évidements (55;56), sur lesquelles on a disposé les bandes de mesure de l'allongement (DMS 1L-DMS 4L; DMS 1Q-DMS 4Q).

10. Dispositif selon une quelconque des revendications 1 à 9, caractérisé en ce que le dispositif de mesure (9; 51-58) présente des paires de bandes de mesure de l'allongement (11/12; DMS 1L/DMS 2L;

DMS 3L/DMS 4L; DMS 1Q/DMS 2Q; DMS 3Q/DMS 4Q) qui sont disposées les unes à côté des autres de telle manière qu'une bande de mesure de l'allongement est allongée lorsque l'autre est comprimée et qui sont disposées dans un circuit à pont avec un point de prise situé entre les deux.

11. Dispositif selon la revendication 9, caractérisé en que la masse de matière synthétique (54) est également intégré dans la construction du bâti (49; 50) de manière à transmettre la force.

12. Dispositif selon les revendications 5 et 8, caractérisé en ce que le dispositif mobile est une voiturette de golf, le caisson (21) mentionné étant disposé comme pièce centrale d'un dispositif de fixation (23, 29) pour le sac de golf, comportant deux barres (23) rigides partant dudit caisson, convergentes, pliées en leur extrémité vers le haut et en s'écartant l'une de l'autre, qui sont prolongées par une barre de traction (27) pourvue d'une poignée (26) en leur extrémité, et comportant un étrier de support (29) fixé sur le caisson à l'aide de deux articulations (26), pouvant être rabattu à partir d'une position d'appui sur les deux barres (23) et en ce que le dispositif de mesure (25) est disposé au niveau de la transition entre les barres (23) mentionnées et la barre de traction (27) ou entre celle-ci et la poignée.

13. Dispositif selon la revendication 10, caractérisé en ce que le circuit à pont est formé par deux paires de bandes de mesure de l'allongement (DMS 1L/DMS 2L; DMS 3L/DMS 4L; DMS 1Q/DMS 2Q; DMS 3Q/DMS 4Q), les bandes de mesure de l'allongement disposées diagonalement les unes par rapport aux autres dans le circuit à pont étant toutes deux soit allongées soit comprimées.

14. Dispositif selon une quelconque des revendications 1 à 13, caractérisé en ce qu'on a prévu une commande de démarrage déclenchée par la tension génératrice du moteur (4; 41-44; 80) pour produire le fonctionnement instantané de la commande auxiliaire.

15. Dispositif selon une quelconque des revendications 3 à 14, caractérisé en ce que la commande (7; 70; 81-83) comprend une unité à microprocesseur (83) recevant le signal du dispositif de mesure (9; 25; 51-58; 84-85), une commande pour le fonctionnement du moteur (81) reliée à l'unité à microprocesseur (83) avec des transformateurs de sortie produisant les tensions de fonctionnement du moteur et un dispositif pour déterminer la position angulaire du rotor dans le moteur (4; 41-44; 80), l'unité à microprocesseur (83) étant prévue pour le calcul des signaux de commande à envoyer à la commande de fonctionnement du moteur (81) en tenant compte de la position angulaire déterminée du rotor.

16. Dispositif selon une quelconque des revendications 1 à 15, caractérisé en ce que la commande (7; 70; 81-83) pour le réglage de la force d'entraînement musculaire principale définie est prévue de telle manière qu'un utilisateur du dispositif mobile doit développer une puissance d'entraînement constante, indépendante de sa vitesse.

Fig.1

Fig.2

Fig.3

Fig.4

34

21

34

35

28

37

32

28

48

39

46

44 43

46 45

47

42

37

40

33 36

40

41

Fig.5

38

46

Fig.6

Fig. 7

## Fig.8

52

55    55

57    57    57    57

DMS 1L    DMS 2L    DMS 3L    DMS 4L

DMS 2Q    58                                    58    DMS 4Q

56

DMS 1Q    58                        53        58    DMS 3Q

51

## Fig.9

DMS 2L    DMS 4L — X1 (Ucc)

R    R

— X2 (+)

DMS 1L    DMS 3L — X3 (-)

R    R

— X4 (GND)

DMS 2Q    DMS 4Q — X1 (Ucc)

R    R

— X2 (+)

DMS 1Q    DMS 3Q — X3 (-)

R    R

— X4 (GND)

Fig. 10

Fig. 12

Fig. 11